Europäisches Patentamt

European Patent Office

Office européen des brevets

(19)

(11) Veröffentlichungsnummer : **0 063 229**
**B1**

(12) **EUROPÄISCHE PATENTSCHRIFT**

(45) Veröffentlichungstag der Patentschrift :
26.09.84

(21) Anmeldenummer : **82101720.9**

(22) Anmeldetag : **05.03.82**

(51) Int. Cl.³ : **B 41 F 13/42, B 41 F 33/00,
B 41 F 33/12, F 16 P 3/08**

(54) **Schutzvorrichtung an Rotationsdruckmaschinen.**

(30) Priorität : **16.04.81 DE 3115475**

(43) Veröffentlichungstag der Anmeldung :
**27.10.82 Patentblatt 82/43**

(45) Bekanntmachung des Hinweises auf die Patenterteilung : **26.09.84 Patentblatt 84/39**

(84) Benannte Vertragsstaaten :
**AT CH DE FR GB IT LI NL SE**

(56) Entgegenhaltungen :
**FR-A- 2 218 014**
**GB-A- 2 017 251**

(73) Patentinhaber : **M.A.N.-ROLAND Druckmaschinen
Aktiengesellschaft
Christian-Pless-Strasse 6-30
D-6050 Offenbach/Main (DE)**

(72) Erfinder : **Rebel, Herbert
Ober-Rodener-Strasse 112
D-6054 Rodgau 3 (DE)**
Erfinder : **Seib, Berthold
Freiherr-v.-Stein-Strasse 35
D-6054 Rodgau 2 (DE)**

EP 0 063 229 B1

Jouve, 18, rue St-Denis, 75001 Paris, France

## Beschreibung

Die Erfindung betrifft eine Vorrichtung entsprechend dem Oberbegriff des ersten Anspruchs.

Schutzabdeckungen dienen an Rotationsdruckmaschinen zur großflächigen Abdeckung von Gefahrenstellen insbesondere dort, wo sich rotierende Maschinenteile befinden, durch die sich das Bedienungspersonal verletzen kann. Derartige Schutzabdeckungen müssen aber an den Druckmaschinen abnehmbar oder abklappbar angeordnet werden, um Wartungsbzw. Einstellarbeiten vornehmen zu können. Deshalb fordert die Berufsgenossenschaft solche Schutzabdeckungen und deren elektrische Absicherung, die dann üblicherweise nach abgenommenen oder abgeklappten Schutzabdeckungen nur noch bestimmte Maschinenfunktionen gestattet bzw. die Maschine stillsetzt. Da jedoch großflächige Schutzabdeckungen zum Wegklappen oder Wegschwenken ein entsprechendes Raumangebot benötigen, sind derartige Schutzabdeckungen unterteilt ausgeführt worden.

Eine Vorrichtung dieser Gattung ist durch die GB-A-2 017 251 bekannt. Diese Vorrichtung ist für die Abdeckung von Durchgängen vorgesehen. Demzufolge steht die Stabilität der Abdeckung und die Sicherheit bei Betätigung im Vordergrund. Die für die Bedienbarkeit der Maschine notwendige Variabilität der Betätigung der Abdeckungen ist nich so gut gegeben.

Eine weitere Schutzabdeckung ist z. B. aus der DE-A-2 350 827 bekannt geworden. Speziell in Fig. 1 sind entsprechende Schutzabdeckungen schematisch dargestellt, die, wie aus der Skizze ersichtlich, teilweise übereinander geklappt werden können und in ihrer Arbeitsstellung die abzudeckenden Gefahrenstellen großflächig überdecken. Der Nachteil dieser Vorrichtung besteht jedoch darin, daß beim gleichzeitigen Aufklappen mehrerer Abdeckungen, wie es z. B. beim Reinigen der Zylinder sinnvoll ist, eine Platzeinschränkung dadurch inkaufgenommen werden muß, daß sich die einzelnen Schutzabdeckungen nicht ineinander klappen lassen.

Hierdurch ist es dann möglich, daß aus der ungünstigen Anordnung der Schutze eine Beeinträchtigung der Bedienungsfreundlichkeit resultiert und die entsprechenden Schutze abgebaut werden und eine elektrische Absicherung so manipuliert wird, daß die Maschine trotzdem produzieren kann. Da dies aber unter allen Umständen vermieden werden soll, müssen an den Maschinen Schutze vorgesehen werden, die die Bedienungsfreundlichkeit der Maschine nicht beeinflussen können.

Der Erfindung liegt deshalb die Aufgabe zugrunde, Gefahrenzonen an Druckmaschinen mit möglichst großflächigen Abdeckungen so abzusichern, daß für das Bedienungspersonal ein möglichst großer Schutz gewährleistet wird, ohne daß die Bedienungsfreundlichkeit der Druckmaschine beeinträchtigt wird.

Gelöst wird diese Aufgabe durch eine Vorrichtung entsprechend dem kennzeichnenden Teil des ersten Anspruchs.

Diese Vorrichtung besitzt gegenüber den bekannten Vorrichtungen Vorteile, die es ermöglichen, die einzelnen Teilabdeckungen so ineinander zu klappen und teilsweise so zu verschwenken, daß die Bedienungsfreundlichkeit nicht beeinträchtigt wird und trotzdem optimaler Schutz für das Bedienungspersonal besteht. Insbesondere sind die Verschwenkachsen so weit entfernt von der eigentlichen Schutzzone, daß beim Wegklappen der Schutze große Bedienzonen geschaffen werden.

An einem Ausführungsbeispiel ist die Erfindung nachfolgende beschrieben und an Hand einer Skizze näher erläutert.

Figur 1 zeigt eine Ansicht einer Druckmaschine mit der Schutzvorrichtung entsprechend der Erfindung ;

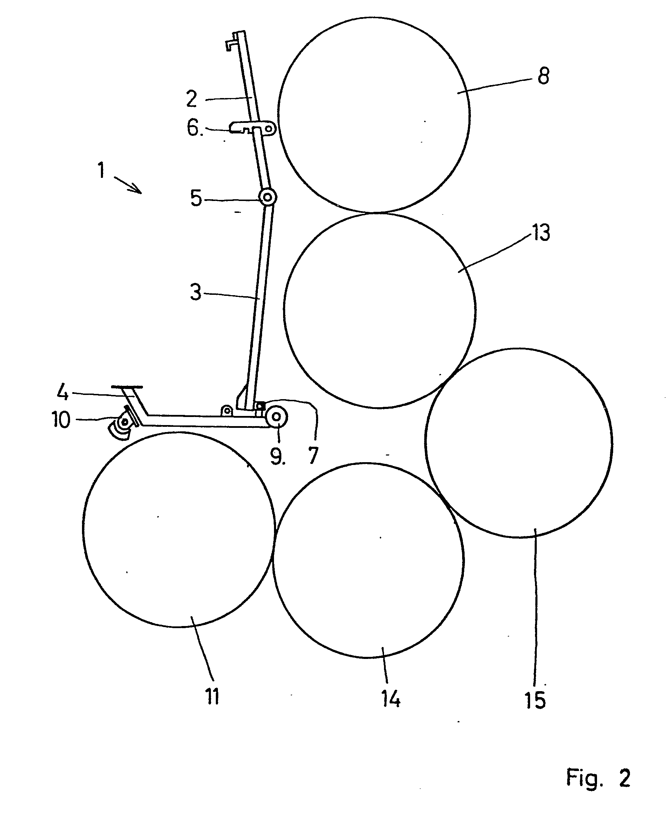

Figur 2 zeigt die Lage der Schutzabdeckung zu den Zylindern in vergrößertem Maßstab ;

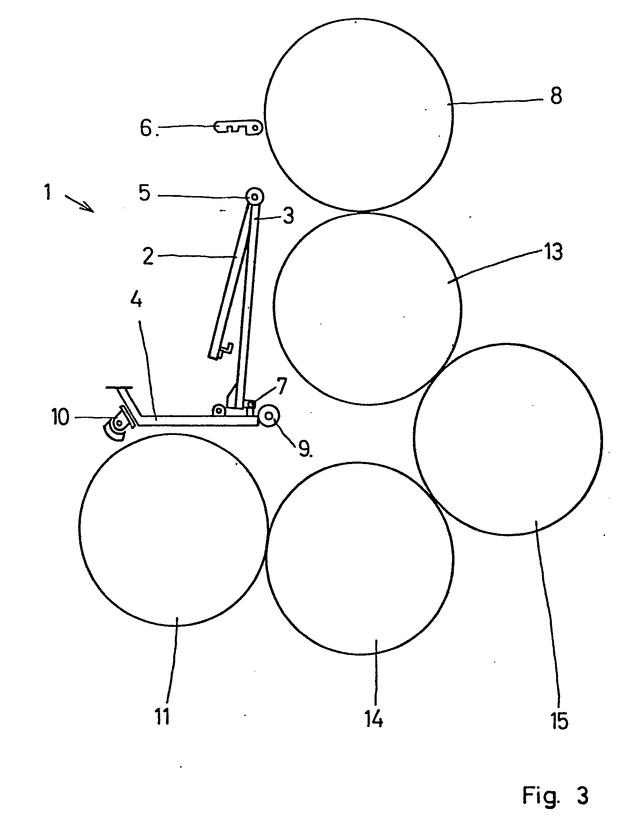

Figuren 3-5 zeigen die Möglichkeiten, wie die Schutzabdeckungen geklappt werden können, um an die einzelnen Zylinder zwecks Wartung und Einstellarbeiten herankommen zu können.

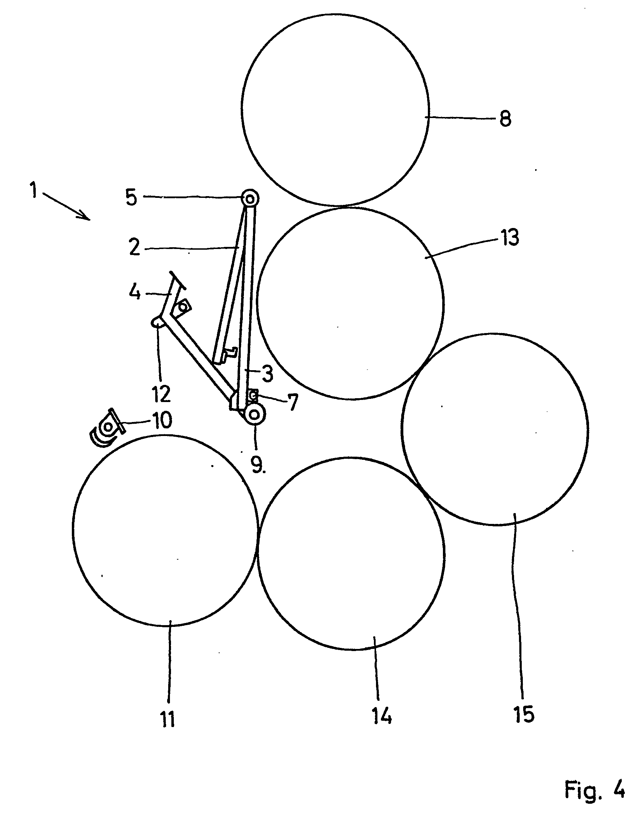

Die Schutzvorrichtung 1 ist in einzelne großflächige Schutzabdeckungen 2, 3, 4 unterteilt. Die Schutzabdeckungen 2, 3 sind im Punkt 5 scharnierartig miteinander gelenkig verbunden. Während die Schutzabdeckung 2 durch eine Klinke 6 gehalten ist, liegt die Schutzabdeckung 3 an einem Anschlag 7 an, der an der Schutzabdeckung 4 befestigt ist. Diese ist im Punkt 9 schwenkbar befestigt und stützt sich auf einem Anschlag 10 ab. Durch die scharnierartige Verbindung der Schutzabdeckungen-2, 3 im Punkt 5 können beide Schutzabdeckungen 2, 3 unabhängig voneinander so bewegt werden, daß beide Schutzabdeckungen in einer Ebene übereinander liegen. Zum Einrichten des oberen Plattenzylinder 8 wird die Schutzabdeckung 2 durch Anheben der Klinke 6 entriegelt und nach unten geklappt, so daß diese sich auf der Schutzabdeckung 3 abstützen kann. Damit wird der obere Plattenzylinder 8 für das Bedienungspersonal zugänglich. Um sinnvollerweise auch an den unteren Plattenzylinder 11 gelangen zu können, um dort ebenfalls die erforderlichen Einrichtarbeiten durchführen zu können, wird die Schutzabdeckung 4 angehoben und in einer Position entsprechend Fig. 4 durch eine Klinke 12 fixiert. Durch das Anheben der Schutzabdeckung 4 in die in der Fig. 4 gezeigten Position, bewegt sich der Anschlag 7 auf einer Kreisbahn um den Punkt 9. Hierdurch gelangen auch die beiden übereinander geklappten Schutzabdeckungen 2, 3 in eine solche Position, die es gestattet, die Schutzabdeckung 4 quasi mit den Schutzabdeckungen 2, 3 ineinander zu schwenken.

Dies ermöglicht einen störungsfreien Zugang zum unteren Plattenzylinder 11. Die Schutzabdeckungen sind in Fig. 4 nicht vollständig ineinandergeklappt, um die Anschaulichkeit nicht zu beeinträchtigen.

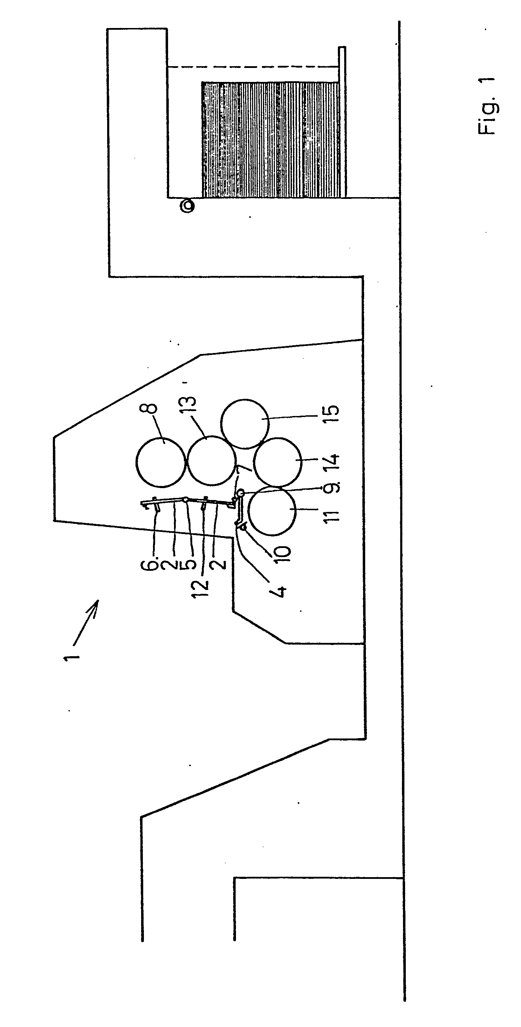

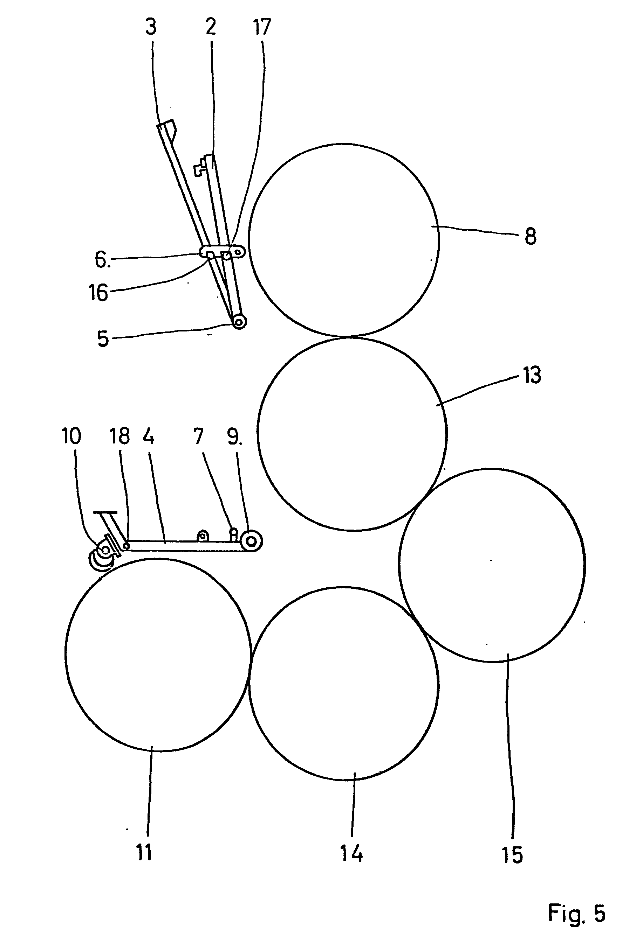

Zum Reinigen der beiden Gummizylinder 13 und 14 und gegebenenfalls des Druckzylinders 15, wird die Schutzabdeckung 3 aus der in Fig. 1 dargestellten Position in die in der Fig. 5 dargestellte Position verschwenkt und ebenfalls durch die Klinke 6 arretiert. In dieser Stellung werden die beiden Gummizylinder 13, 14 und der Druckzylinder 15 freigegeben.

Die Klinken 6, 12 sind so ausgebildet, daß sie als Fangklinken arbeiten, d. h. daß die Klinken 6, 12 selbsttätig, einrasten. Hierzu sind an den entsprechenden Schutzabdeckungen geeignete Bolzen 16, 17, 18 vorgesehen. Da die Klinke 6 zwei Schutzabdeckungen, nämlich 2, 3, arretieren muß, ist diese Klinke als Doppelklinke ausgebildet. Damit beim Entriegeln der Schutzabdeckung 3 nicht auch gleichzeitig die Schutzabdeckung 2 entriegelt wird, besitzt die Schutzabdeckung 3 im Bereich der Klinke 6 einen Anschlag, der den Schwenkweg der Klinke 6 so begrenzt, daß die Schutzabdeckung 2 nicht entriegelt wird.

Zur Sicherung des Bedienungspersonals sind die einzelnen Schutzabdeckungen 2, 3, 4 in bekannter Weise elektrisch abgesichert.

**Ansprüche**

1. Schutzvorrichtung an Rotationsdruckmaschinen mit mehrteiligen, flächenförmigen unteren, mittleren und oberen Schutzabdeckungen, welche die Gefahrenstellen der Druckwerke abdecken und zu Einstell- und Wartungsarbeiten abklappbar und dabei elektrische Sicherheitseinrichtungen beeinflussend angeordnet sind, wobei die Schwenkachsen (Punkte 5, 9) der Schutzabdeckungen (2, 3, 4) so angeordnet sind, daß die Schutzabdeckungen (2, 3, 4) in abgeklapptem Zustand derart ineinander schwenkbar sind, daß zu Einstell- und Wartungsarbeiten ein größtmöglicher Freiraum schaffbar ist und wobei weiterhin die eine Schutzabdeckung (4) Anschlag für die benachbarte Schutzabdeckung (3) ist, dadurch gekennzeichnet, daß die obere und die mittlere Schutzabdeckung (2, 3) durch ein gemeinsames ortsfest am Maschinengestell angebrachtes Scharnier (Punkt 5) miteinander verbunden sind und die untere Schutzabdeckung (4) um ein ortsfest am Maschinengestell angeordnetes Scharnier (Punkt 9) verschwenkbar ist, daß die mittlere Schutzabdeckung (3) im abgeklappten Zustand durch eine obere Klinke (6) und die untere Schutzabdeckung (4) durch eine untere Klinke (12) arretierbar ist, wobei die obere Klinke (6) als Doppelklinke ausgebildet ist, die in Normalstellung die obere Schutzabdeckung (2) fixiert, und daß der Anschlag (7) für das untere Ende der mittleren Schutzabdeckung (3) sich in der Nähe der Schwenkachse (Punkt 9) der unteren Schutzabdeckung (4) befindet.

2. Schutzvorrichtung nach Anspruch 1, dadurch gekennzeichnet, daß der Anschlag (7) gegenüber der Schwenkachse (Punkt 9) der unteren Schutzabdeckung (4) beim Abklappen der Schutzabdeckung (4) so verschwenkbar ist, daß die auf dem Anschlag (7) ruhende mittlere Schutzabdeckung (3) in Richtung des Gummizylinders (13) schwenkbar ist.

**Claims**

1. Protective device on a rotary printing press with multi-part sheet-shaped lower, central and upper protective coverings, which cover the dangerous positions of the printing unit and which for adjustment and maintenance work can be swung out and for this are arranged to influence electrical safety devices, wherein the rotation axes (points 5, 9) of the protective coverings (2, 3, 4) are so arranged that the protective coverings (2, 3, 4) in the swung out position are swingable into one another in such a way that for adjustment and maintenance work the greatest possible free space is created and wherein further one of the protective covers (4) is a stop for the neighbouring protective cover (3) characterised in that the upper and the middle protective cover (2, 3) are connected together by a common hinge (point 5) attached fixedly to the machine frame and the lower protective cover (4) is swingable about a hinge (point 7) arranged fixedly on the machine frame, that the middle protective cover (3) in the outwardly folded condition can be latched by an upper latch (6) and the lower protective cover (4) by a lower latch (12), wherein the upper latch (6) is constructed as a double latch which in the normal position fixes the upper protective cover (2) and that the stop (7) for the lower end of the middle protective cover (3) is located in the neighbourhood of the rotational axis (point 9) of the lower protective cover (4).

2. Protective device according to claim 1 characterised in that the stop (7) is so swingable relative to the rotational axis (point 9) of the lower protective cover (4) on swinging out the protective cover (4) that the central protective cover (3) resting on the stop (7) can be swung out in the direction of the blanket cylinder (13).

**Revendications**

1. Dispositif de protection sur des machines à imprimer rotatives comportant des écrans de protection en plusieurs parties, inférieurs, médians et supérieurs à surface plane, qui recouvrent les zones dangereuses des groupes d'impression et qui, pour les travaux de réglage et d'entretien, sont agencés, rabattables et en même temps agissant sur le dispositif de sécurité électrique, les axes de pivotement (points 5, 9) des écrans de protection (2, 3, 4) étant agencés de façon que les écrans de protection (2, 3, 4), lorsqu'ils sont rabattus, peuvent basculer l'un dans l'autre de sorte que le plus grand espace libre possible soit créé pour les travaux de réglage et d'entretien, et l'écran de protection (4) étant, en outre, une butée pour l'écran de protection voisin (3), caractérisé en ce que les écrans médian et supérieur (2, 3) sont liés l'un à l'autre par une charnière (point 5) commune, agencée fixement sur le bâti de la machine et que l'écran de protection inférieur (4) peut pivoter autour d'une charnière (point 9) agencée fixement sur le bâti de la machine, en ce que l'écran de protection médian (3) lorsqu'il est rabattu peut être bloqué par un cliquet supérieur (6) et l'écran de protection inférieur (4) par un cliquet inférieur (6), le cliquet supérieur (6) étant conformé en cliquet double, qui dans la position normale fixe l'écran de protection supérieur (2), et en ce que la butée (7) pour la partie inférieure de l'écran de protection médian (3) se trouve dans le voisinage de l'axe de pivotement (point 9) de l'écran de protection inférieur (4).

2. Dispositif de protection selon la revendication 1, caractérisé en ce que la butée (7) est basculable par rapport à l'axe de pivotement (point 9) de l'écran de protection inférieur (4) lorsqu'on rabat ledit écran de protection (4), de façon que l'écran de protection médian (3) reposant sur la butée (7) peut pivoter dans la direction du cylindre à blanchet (13).

6.
2
5
12
2
8
13
4
10
11 9 14 15
1

0 063 229

Fig. 1

Fig. 2

Fig. 3

Fig. 4

0 063 229

Fig. 5